# EUROPEAN PATENT SPECIFICATION

(11) **EP 3 484 167 B1**
(45) Date of publication and mention of the grant of the patent: **01.12.2021**
(21) Application number: 17306581.4
(22) Date of filing: 14.11.2017
(51) Int. Cl.: H04Q 11/00

(54) **OPTICAL CROSS-CONNECT FOR AN OPTICAL-NETWORK NODE**
OPTISCHE QUERVERBINDUNGSEINRICHTUNG FÜR EINEN OPTISCHEN NETZWERKKNOTEN
RÉPARTITEUR OPTIQUE POUR UN NOEUD DE RÉSEAU OPTIQUE

(43) Date of publication of application: 15.05.2019
(73) Proprietor: Alcatel Submarine Networks, 91620 Nozay (FR)
(72) Inventor: ZAMI, Thierry, 91300 Massy (FR)
(74) Representative: DREISS Patentanwälte PartG mbB

(56) References cited:
- EP-A1- 2 916 475
- US-A1- 2008 181 605
- US-B1- 7 272 309

## Description

### BACKGROUND

### Field

The present disclosure relates to optical communication equipment and, more specifically but not exclusively, to optical switches that can be used in an optical-network node.

### Description of the Related Art

This section introduces aspects that may help facilitate a better understanding of the disclosure. Accordingly, the statements of this section are to be read in this light and are not to be understood as admissions about what is in the prior art or what is not in the prior art.

An optical cross-connect (OXC) switch can be used to perform remote (re)configuration of a network node. An OXC switch can be software-provisionable, which enables the network operator to remotely specify which of the carrier wavelengths are to be added, dropped, and/or passed through at the network node. OXC switches can be used, e.g., in network nodes of regional, metro, and long-haul optical networks. Some OXC switches can be used to implement reconfigurable optical add/drop multiplexers.

An OXC engineer sometimes needs to accommodate conflicting OXC-design requirements, such as low insertion losses and high degree of optical isolation between wavelength channels. The latter two requirements conflict with each other, e.g., because the high degree of optical isolation typically requires tighter optical filtering which normally leads to higher insertion losses. An OXC architecture that provides flexibility for achieving an acceptable compromise between these and possibly other conflicting design requirements is therefore desirable.

US 7 272 309 B1 discloses a System and method of routing data at a photonic core. EP 2 916 475 A1 discloses an N-degree colorless directionless and contentionless wavelength selective cross-connect reconfigurable optical add-drop multiplexer. US 2008/181605 A1 discloses multi-degree optical node architectures.

### SUMMARY OF SOME SPECIFIC EMBODIMENTS

Disclosed herein are various embodiments of an optical cross-connect switch having ingress and egress wavelength-selective switches (WSSes) interconnected such that at least some ingress/egress WSS pairs are connected by way of two different respective optical paths originating at two different output ports of the ingress WSS. The scope of protection of the invention is defined in the claims. One of the two optical paths may include an optical splitter, different optical outputs of which are connected to different respective egress WSSes. Some embodiments may include 2× 1 optical couplers, each configured to join the two respective optical paths prior to connecting them to an input port of the egress WSS. In some embodiments, the ingress WSS may have two sets of wavelength channels characterized by two different slot widths and be configurable to direct optical signals corresponding to one set through one of the two optical paths while directing optical signals corresponding to the other set through the other one of the two optical paths.

Some embodiments can advantageously be used to satisfy different filtering and insertion-loss requirements for different sets of wavelength channels.

According to an example embodiment, provided is an apparatus comprising: a plurality of ingress wavelength-selective switches, each having a respective input port and a respective set of output ports; a plurality of egress wavelength-selective switches, each having a respective output port and a respective set of input ports; and an interconnect device configured to optically connect the output ports of the ingress wavelength-selective switches and the input ports of the egress wavelength-selective switches using optical waveguides; and wherein, for at least some pairs of the ingress and egress wavelength-selective switches optically connected through the optical waveguides, the interconnect device is configured to: optically connect one of the output ports of a respective ingress wavelength-selective switch to one of the input ports of a respective egress wavelength-selective switch; and optically connect a different one of the output ports of the respective ingress wavelength-selective switch to said one of the input ports or to a different one of the input ports of the respective egress wavelength-selective switch.

In some embodiments of the above apparatus, the interconnect device comprises an optical splitter having an optical input and a plurality of optical outputs, the optical input being optically connected to said different one of the output ports of the respective ingress wavelength-selective switch, one of the optical outputs being optically connected to said one of the input ports or to said different one of the input ports of the respective egress wavelength-selective switch.

In some embodiments of any of the above apparatus, another one of the optical outputs of the optical splitter is optically connected to an input port of another egress wavelength-selective switch.

In some embodiments of any of the above apparatus, each of the optical outputs of the optical splitter is optically connected to an input port of a different respective egress wavelength-selective switch.

In some embodiments of any of the above apparatus, the interconnect device further comprises an optical coupler having first and second optical inputs and an optical output, the first optical input being optically connected to said one of the output ports of the respective ingress wavelength-selective switch, the second optical input being optically connected to said one of the outputs of the optical splitter, the optical output of the optical coupler being optically connected to said one of the input ports of the respective egress wavelength-selective switch.

In some embodiments of any of the above apparatus, the apparatus further comprises a degree-N optical cross-connect switch, where N is an integer greater than two; and wherein the optical splitter has N-1 optical outputs.

In some embodiments of any of the above apparatus, the interconnect device comprises N optical splitters, each having N-1 optical outputs, each of the N-1 optical outputs being optically connected to an input port of a different respective egress wavelength-selective switch.

In some embodiments of any of the above apparatus, the interconnect device comprises an optical coupler having first and second optical inputs and an optical output, the first optical input being optically connected to said one of the output ports of the respective ingress wavelength-selective switch, the second optical input being optically connected to said different one of the output ports of the respective ingress wavelength-selective switch, the optical output of the optical coupler being optically connected to said one of the input ports of the respective egress wavelength-selective switch.

In some embodiments of any of the above apparatus, the apparatus further comprises a degree-N optical cross-connect switch, where N is an integer greater than two; and wherein the interconnect device comprises N(N-1) 2 × 1 optical couplers connected to the optical waveguides.

In some embodiments of any of the above apparatus, the interconnect device comprises N optical splitters, each having N―1 optical outputs, each of the N―1 optical outputs being optically connected to an input port of a different respective egress wavelength-selective switch by way of a respective one of the N(N―1) 2 × 1 optical couplers.

In some embodiments of any of the above apparatus, the interconnect device comprises: a first optical coupler having first and second optical inputs and an optical output, the optical output of the first optical coupler being optically connected to one of the input ports of a corresponding egress wavelength-selective switch, the first optical input of the first optical coupler being optically connected to one of the output ports of a first respective ingress wavelength-selective switch, the second optical input of the first optical coupler being optically connected to one of the output ports of a second respective ingress wavelength-selective switch; and a second optical coupler having first and second optical inputs and an optical output, the optical output of the second optical coupler being optically connected to another one of the input ports of the corresponding egress wavelength-selective switch, the first optical input of the second optical coupler being optically connected to another one of the output ports of the first respective ingress wavelength-selective switch, the second optical input of the second optical coupler being optically connected to another one of the output ports of the second respective ingress wavelength-selective switch.

In some embodiments of any of the above apparatus, the interconnect device is configured to optically connect said different one of the output ports of the respective ingress wavelength-selective switch to said different one of the input ports of the respective egress wavelength-selective switch.

In some embodiments of any of the above apparatus, the apparatus further comprises a wavelength blocker coupled between said different one of the output ports of the respective ingress wavelength-selective switch and the interconnect device.

In some embodiments of any of the above apparatus, the apparatus further comprises an optical amplifier serially connected with wavelength blocker and coupled between said different one of the output ports of the respective ingress wavelength-selective switch and the interconnect device.

In some embodiments of any of the above apparatus, each of the ingress wavelength-selective switches has K output ports; and each of the egress wavelength-selective switches has L input ports, where L>K.

In some embodiments of any of the above apparatus, the respective ingress wavelength-selective switch has a first set of wavelength channels, each having a first slot width, and a second set of wavelength channels, each having a second slot width different from the first slot width.

In some embodiments of any of the above apparatus, the respective ingress wavelength-selective switch is configurable to: route optical signals of the first set of wavelength channels to said one of the output ports thereof; and route optical signals of the second set of wavelength channels to said different one of the output ports thereof.

In some embodiments of any of the above apparatus, the respective ingress wavelength-selective switch is configured to: have the first set of wavelength channels arranged within a first spectral band; and have the second set of wavelength channels arranged within a second spectral band, the second spectral band being distinct from the first spectral band.

In some embodiments of any of the above apparatus, the apparatus further comprises a plurality of optical add/drop blocks; and the interconnect device is further configured to: optically connect the output ports of the ingress wavelength-selective switches to at least some of the optical add/drop blocks; and optically connect the input ports of the egress wavelength-selective switches to at least some of the optical add/drop blocks.

In some embodiments of any of the above apparatus, the plurality of egress wavelength-selective switches has N egress wavelength-selective switches, where N is an integer greater than one; the plurality of ingress wavelength-selective switches has N ingress wavelength-selective switches; the plurality of optical add/drop blocks has M optical add/drop blocks, where M is an integer greater than one; each of the ingress wavelength-selective switches has K output ports, where K≥N+M; and each of the egress wavelength-selective switches has L input ports, where L≥2N+M-2.

### BRIEF DESCRIPTION OF THE DRAWINGS

Other aspects, features, and benefits of various disclosed embodiments will become more fully apparent, by way of example, from the following detailed description and the accompanying drawings, in which:
FIG. 1 shows a block diagram of an OXC switch according to an embodiment;
FIG. 2 schematically shows some of the optical paths in the OXC switch of FIG. 1 according to an embodiment;
FIG. 3 schematically shows some of the optical paths in the OXC switch of FIG. 1 according to another embodiment;
FIG. 4 shows a block diagram of an optional optical module that can be used in the OXC switch of FIG. 1 according to an embodiment;
FIGs. 5A-5D graphically show example spectra of WDM signals that can be transmitted through the OXC switch of FIG. 1 according to an embodiment; and
FIG. 6 schematically shows some of the optical paths in the OXC switch of FIG. 1 according to yet another embodiment.

### DETAILED DESCRIPTION

A network node or OXC switch is often described in reference to its number N of "degrees." Each degree represents a respective switching direction that is typically associated with a duplex fiber pair. For example, a degree-2 OXC switch operates to switch optical signals in two directions, typically referred to as "East" and "West." A degree-4 OXC switch operates to switch optical signals in four directions, typically referred to as "North," "South," "East," and "West," and so on. The number of degrees supported by modern network nodes and OXC switches typically falls in the range between N=2 and N=20. OXC devices corresponding to N>20 are also used, albeit less frequently.

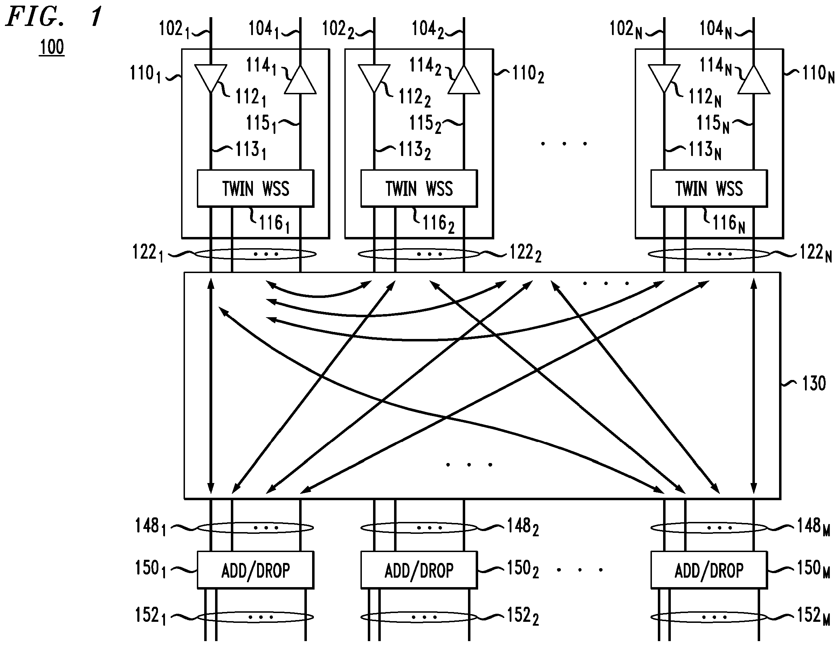

FIG. 1 shows a block diagram of an OXC switch **100** according to an embodiment. OXC switch **100** is a degree-N OXC switch, where N is an integer greater than one. Although FIG. 1 illustrates an embodiment of OXC switch **100** corresponding to N>2, embodiments in which N=2 are also contemplated. Various embodiments of OXC switch **100** can be used, e.g., to implement various network nodes.

OXC switch **100** comprises optical-line modules **110₁-110_{N}**, each connected between a respective one of duplex fiber pairs **(102₁/104₁)-(102_{N}/104_{N})** and a fiber-interconnect device **130.** Each of duplex fiber pairs **(102₁/104₁)-(102_{N}/104_{N})** is configured to support a duplex optical connection associated with the respective degree of OXC switch **100.** A fiber **102ₙ** (where n=1, 2, ..., N) is configured to apply incoming optical signals to optical-line module **110ₙ**. A fiber **104ₙ** is configured to transmit outgoing optical signals outputted by optical-line module **110n**. Fiber-interconnect device **130** optically interconnects optical-line modules **110₁-110_{N}** and optical add/drop blocks **150₁-150_{M}** as described in more detail below, where M is an integer greater than one. In some embodiments, M≥N.

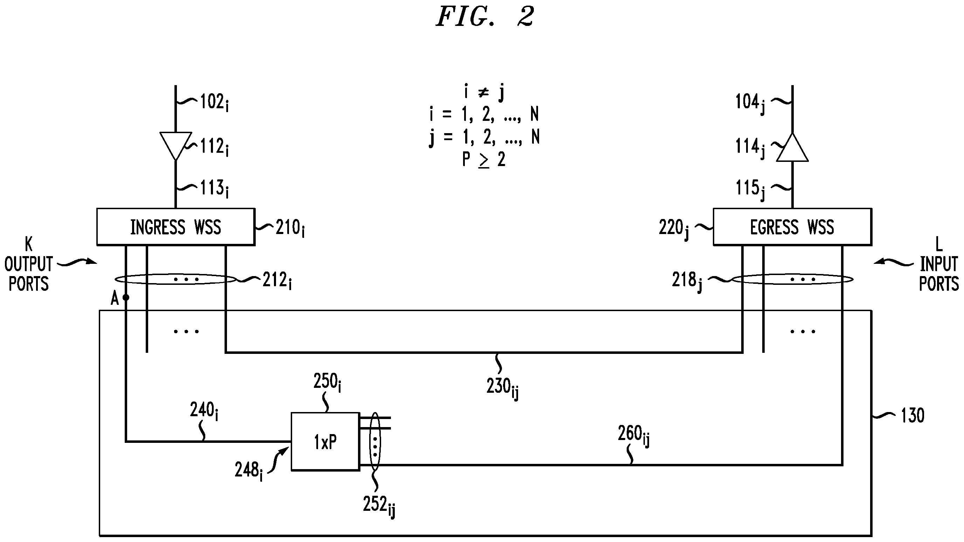

In an example embodiment, an optical-line module **110ₙ** comprises optical amplifiers **112n** and **114n** and a twin wavelength-selective switch (WSS) **116ₙ**. One or more of optical amplifiers **112ₙ** and **114ₙ** may be optional. When present, optical amplifier **112ₙ** is connected to fiber **102ₙ** and operates to amplify the input optical signals received by optical-line module **110ₙ**. When present, optical amplifier **114ₙ** is connected to fiber **104ₙ** and operates to amplify output optical signals transmitted by optical-line module **110ₙ**. Twin WSS **116ₙ** includes an ingress WSS and an egress WSS (not explicitly shown in FIG. 1, see FIGs. 2-3). (Herein, a twin WSS is a pair of WSSes. Each member of such a pair communicates light with one optical fiber of an input/output pair at the same degree of an OXC.) The ingress WSS of twin WSS **116ₙ** is configured to appropriately de-multiplex an input wavelength-division-multiplexed (WDM) signal received through an input port **113ₙ** connected to fiber **102ₙ** and apply the resulting de-multiplexed optical signals to a corresponding subset of optical fibers **122ₙ** that connect the twin WSS and fiber-interconnect device 130. The egress WSS of twin WSS **116ₙ** is configured to multiplex optical signals received through a remaining subset of optical fibers **122ₙ** from fiber-interconnect device **130** and apply the resulting output WDM signal to an output port **115ₙ** connected to fiber **104ₙ**.

In an example embodiment, each set of optical fibers **122ₙ** may include (K+L) individual optical fibers, each configured to provide a simplex connection, where K is the number of output ports in the ingress WSS of twin WSS **116ₙ**, and L is the number of input ports in the egress WSS of twin WSS **116ₙ**. The numbers K and L depend, *inter alia,* on the numbers N and M, and other pertinent characteristics of the particular embodiment of OXC switch **100.** As an example, in some embodiments, each set of optical fibers **122ₙ** may include up to sixty-four or up to eighty optical fibers. In some embodiments, K≠L, e.g., as explained below in reference to FIGs. 2-3.

In an example embodiment, an add/drop block **150ₘ** (where m=1, 2, ..., M) includes an add sub-block and a drop sub-block (not explicitly shown in FIG. 1). The add sub-block of add/drop block **150ₘ** operates to appropriately multiplex the optical signals received through a subset of optical fibers **152ₘ** from the corresponding external optical transmitters (not explicitly shown in FIG. 1) and apply the one or more resulting WDM signals to the corresponding subset of optical fibers **148ₘ** that connect add/drop block **150ₘ** and fiber-interconnect device **130.** The drop sub-block of add/drop block **150ₘ** operates to appropriately de-multiplex the WDM signals received through another subset of optical fibers **148ₘ** and direct the resulting de-multiplexed optical signals, through another subset of optical fibers **152ₘ**, to the corresponding external optical receivers (not explicitly shown in FIG. 1).

In an example embodiment, each or some of the add and drop sub-blocks of add/drop block **150ₘ** can be implemented using a respective optical multicast switch. A person of ordinary skill in the art will understand that the sizes of these optical multicast switches may depend on the numbers of external optical transmitters and receivers connected, by way of optical fibers **152ₘ**, to each particular add/drop block **150ₘ**.

Fiber-interconnect device **130** is a passive optical device that uses optical waveguides (e.g., planar optical waveguides, optical fibers, and/or fiber-optic cables) and/or free-space optics to interconnect the sets of optical fibers **122ₙ** and **148ₘ** in a manner that provides the following optical connections: (i) between the ingress WSS of optical-line module **110ᵢ** and the egress WSS of optical-line module **110ⱼ**, where i≠j, i=1, 2, ..., N, and j=1, 2, ..., N; (ii) between the ingress WSS of optical-line module **110ₙ** and the drop sub-block of add/drop block **150ₘ**, where n=1, 2, ..., N andm=1, 2, ..., M; and (iii) between the add sub-block of add/drop block **150ₘ** and the egress WSS of optical-line module **110ₙ**, where n= 1, 2, ..., N and m= 1, 2, ..., M. As used herein, the term "passive" should be interpreted to mean that fiber-interconnect device **130** has a fixed optical signal-routing configuration and does not generate any new light. The signal-routing configuration is "fixed" in the sense that the topology of the optical paths through fiber-interconnect device **130** does not change (is constant) during operation of OXC switch **100.** In some (e.g., monolithic fiber-shuffle) embodiments, fiber-interconnect device **130** can be such that the topology of the optical paths therethrough cannot physically be changed without damaging the device in some manner.

In an example embodiment, fiber-interconnect device **130** may connect the set of optical fibers **122₁** to the sets of optical fibers **122₂-122_{N}** and to the sets of optical fibers **148₁-148_{M}** to provide at least (N+M-1) duplex connections for optical-line module **110₁**, wherein at least (N-1) duplex connections connect optical-line module **110₁** to each of optical line modules **110₂-110_{N},** and M duplex connections connect optical-line module **110₁** to each of optical add/drop blocks **150₁-150_{M}.** Fiber-interconnect device **130** may also connect the set of optical fibers **122₂** to the sets of optical fibers **122₁, 122₃-122_{N}** and to the sets of optical fibers **148₁-148_{M}** to provide at least (N+M-1) duplex connections for optical-line module **110₂,** wherein at least (N-1) duplex connections connect optical-line module **110₂** to each of optical line modules **110₁**, **110₃-110_{N}**, and M duplex connections connect optical-line module **110₂** to each of optical add/drop blocks **150₁**-**150_{M}**, and so on.

In addition, for some or all optical-line modules **110₁-110_{N}**, fiber-interconnect device **130** may connect the ingress WSS of optical-line module **110ᵢ** to the egress WSS of optical-line module **110ⱼ** by way of two different optical paths therethrough, where i≠j. The first of the two optical paths may connect one output port of the ingress WSS of optical-line module **110ᵢ** to an input port of the egress WSS of optical-line module **110ⱼ**. The second of the two optical paths may connect another output port of the ingress WSS of optical-line module **110ᵢ** to the same input port of the egress WSS of optical-line module **110ⱼ** as the first path or to another input port of the egress WSS of that optical-line module **110ⱼ**. Examples of such different optical paths are described in more detail below in reference to FIGs. 2-3.

In some alternative embodiments, fiber-interconnect device **130** may only support reduced (with respect to the above-described) connectivity for one or more of twin WSSes **116₁-116_{N}** and/or one or more of optical add/drop blocks **150₁-150_{M}.**

In an example embodiment, the sets of optical fibers **122ₙ** and **148ₘ** can be implemented using fiber-optic cables terminated by suitable multi-fiber connectors. In such an embodiment, each of the fiber-optic cables that implements optical fibers **122ₙ** has a first connector that is mated with a matching connector located on optical-line module **110ₙ**, and a second connector that is mated with a matching connector located on fiber-interconnect device **130.** Each of the fiber-optic cables that implement optical fibers **148ₘ** similarly has a first connector that is mated with a matching connector located on fiber-interconnect device **130,** and a second connector that is mated with a matching connector located on add/drop block **150ₘ**. In some embodiments, the connectors used in the fiber-optic cables that implement the sets of optical fibers **122ₙ** and **148ₘ** can be selected from the assortment of multi-fiber connectors defined in the following standards: (i) IEC-61754-7, "Fibre optic interconnecting devices and passive components -- Fibre optic connector interfaces -- Part 7: Type MPO connector family" and (ii) TIA-604-5-D, "Fiber Optic Connector Intermateability Standard, Type MPO," both of which standards are incorporated herein by reference in their entirety. These standards refer to the multi-fiber connectors defined therein as Multi-fiber Push On (MPO) connectors. In the corresponding embodiments, optical-line modules **110,** fiber-interconnect device **130,** and add/drop blocks **150** have the matching MPO connectors that can be properly mated with the MPO connectors of the fiber-optic cables.

In some embodiments, OXC switch **100** can be modified in a relatively straightforward manner to remove the add and/or drop functionality. The modification may include removing or disconnecting optical add/drop blocks **150₁-150_{M}** and optionally changing the topology of fiber-interconnect device **130** by removing some or all of the optical waveguides connected to the sets of optical fibers **148₁-148_{M}**.

FIG. 2 schematically shows some of the optical paths in OXC switch **100** according to an embodiment. More specifically, FIG. 2 shows an ingress WSS **210ᵢ** and an egress WSS **220ⱼ** connected through fiber-interconnect device **130** as indicated in the figure. Ingress WSS **210ᵢ** is a part of twin WSS **116ᵢ** and is connected through input port **113ᵢ** to fiber **102ᵢ** and optical amplifier **112ᵢ.** Egress WSS **220ⱼ** is a part of twin WSS **116ⱼ** and is connected through output port **115ⱼ** to fiber **104ⱼ** and optical amplifier **114ⱼ**. A person of ordinary skill in the art will understand that the ingress WSS **210ᵢ** and the egress WSS **220ⱼ** shown in FIG. 2 represent any pair of a plurality of such ingress/egress WSS pairs optically connected in the indicated manner.

In an example embodiment, some or all ingress WSSes **210ᵢ** (where i=1, 2, ..., N) and/or some or all egress WSSes **220ⱼ** (where j=1, 2, ..., N) can be implemented using optical devices in which beam-steering elements are implemented using the Liquid Crystal on Silicon (LCoS) technology or the micro-electro-mechanical-system (MEMS) mirrorarray technology, or a combination of both.

In different embodiments, fiber-interconnect device **130** may be configured to provide two different optical paths illustrated in FIG. 2 for each of different WSS pairs, each pair including a respective ingress WSS **210ᵢ** and a respective egress **220ⱼ**.

For example, in one embodiment, fiber-interconnect device **130** may be configured to provide two different optical paths for each pair of WSSes **210ᵢ** and **220ⱼ** defined by the following possible values of the indices "i" and "j": i≠^{j}; i=1, 2, ..., N; and j=1, 2, ..., N. In this embodiment, fiber-interconnect device **130** comprises N optical splitters **250ᵢ**, where i=1, 2, ..., N. Each optical splitter **250ᵢ** is a 1×P splitter having (i) an input port **248ᵢ** connected to an output port of ingress WSS **210ᵢ** using an optical waveguide **240ᵢ** and (ii) P=N-1 output ports **252ᵢⱼ,** each connected by way of a respective optical waveguide **260ᵢⱼ** to an input port of a respective egress WSSes **220ⱼ**, where j≠i and j=1, 2, ..., N. Fiber-interconnect device 130 also connects an output port of ingress WSS **210ᵢ** and an input port of egress WSS **220ⱼ** by way of a respective waveguide **230ᵢⱼ**.

For clarity of depiction, FIG. 2 explicitly shows only one of the connections for the P output ports **252ᵢⱼ** of optical splitter **250ᵢ**, which connection is by way of waveguide **260ᵢⱼ** in fiber-interconnect device **130.** A person of ordinary skill in the art will understand that different output ports **252ᵢⱼ** of optical splitter **250ᵢ** are connected to different respective egress WSSes **220ⱼ** by way of different respective waveguides **260ᵢⱼ**. These connections enable the optical signal applied by ingress WSS **210ᵢ** to waveguide **240ᵢ** to be broadcast to the corresponding plurality of egress WSSes **220ⱼ** connected to output ports 252ᵢⱼ of optical splitter **250ᵢ**. To support the shown connections, the number K of output ports in an ingress WSS **210ᵢ** may satisfy the following inequality: K≥N+M. The number L of input ports in an egress WSS **220ⱼ** may satisfy the following inequality: L≥2N+M-2.

However, in the above-mentioned alternative embodiments, wherein fiber-interconnect device 130 supports reduced connectivity for one or more of twin WSSes **116₁-116_{N}** and/or one or more of optical add/drop blocks **150₁-150_{M}**, one or both of the numbers K and L may be smaller than indicated in the preceding paragraph.

As indicated in FIG. 2, the first of the two different optical paths between ingress WSS **210ᵢ** and egress WSS **220ⱼ** includes waveguide **230ᵢⱼ**. The second of the two different optical paths between ingress WSS **210ᵢ** and egress WSS **220ⱼ** includes waveguide **240ᵢ**, optical splitter **250ᵢ**, and waveguide **260ᵢⱼ**. The first of the two different optical paths connects one output port of the ingress WSS **210ᵢ** to an input port of the egress WSS **220ⱼ**. The second of the two different optical paths connects another output port of the ingress WSS **210ᵢ** to another input port of the egress WSS **220ⱼ**.

Each of ingress WSSes **210ᵢ** is connected to fiber-interconnect device **130** using a corresponding set of optical fibers **212ᵢ.** Each of egress WSSes **220ⱼ** is similarly connected to fiber-interconnect device **130** using a corresponding set of optical fibers **218ⱼ**. The set of optical fibers **212ᵢ** is a subset of optical fibers **122ᵢ** (see FIG. 1) and has K optical fibers. The set of optical fibers **218ⱼ** is a subset of optical fibers **122ⱼ** (also see FIG. 1) and has L optical fibers.

In some alternative embodiments, fiber-interconnect device **130** may have fewer than N optical splitters **250ᵢ**. In such embodiments, fiber-interconnect device **130** is configured to provide two different optical paths only for some pairs of WSSes **210ᵢ** and **220ⱼ**. In some of such embodiments, some or all of the optical splitters **250ᵢ** may have fewer than N―1 output ports **252ᵢⱼ.** In an example embodiment, P≥2.

In some embodiments, some of ingress WSSes **210ᵢ** may have different numbers **Kᵢ** of output ports connected to fiber-interconnect device 130.

In some embodiments, some of egress WSSes **220ⱼ** may have different numbers Lⱼ of input ports connected to fiber-interconnect device **130.**

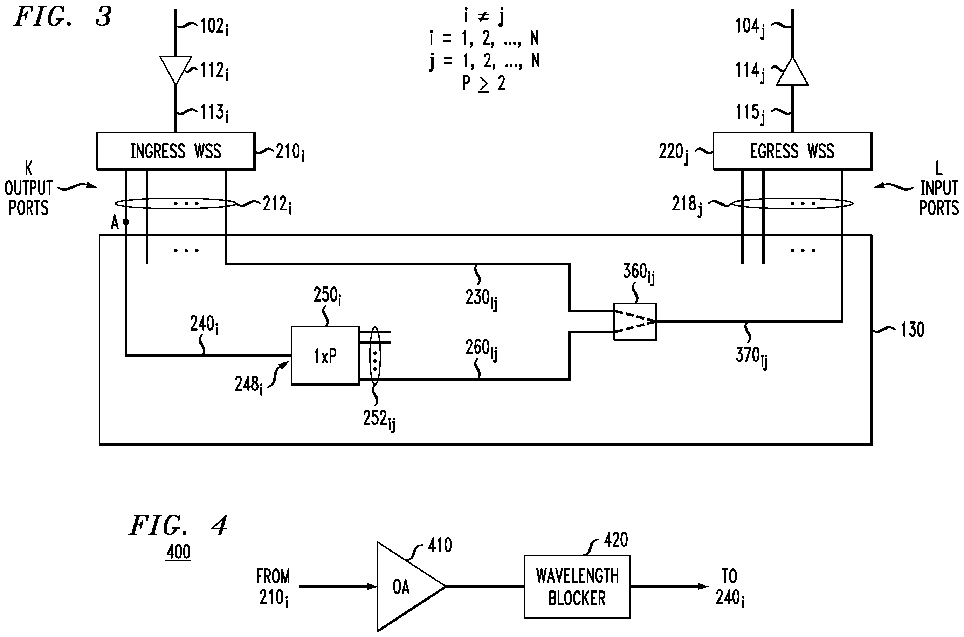

FIG. 3 schematically shows some of the optical paths in OXC switch **100** according to another embodiment. Although the embodiment of FIG. 3 is functionally similar to the embodiment of FIG. 2, the embodiment of FIG. 3 differs from the embodiment of FIG. 2 in that fiber-interconnect device **130** further comprises up to N(N―1) 2 × 1 optical couplers **360ᵢⱼ**. For example, each of egress WSSes **220ⱼ** may have up to (N-1) 2×1 optical couplers **360ᵢⱼ** connected to a corresponding subset of the input ports thereof.

Each of optical couplers **360ᵢⱼ** is configured to join the two corresponding different optical paths between WSSes **210ᵢ** and **220ⱼ** prior to connecting both paths to the egress WSS **220ⱼ**. For example, the optical coupler **360ᵢⱼ** shown in FIG. 3 connects both optical waveguides **230ᵢⱼ** and **260ᵢⱼ** to an optical waveguide **370ᵢⱼ**, which is connected to the corresponding input port of egress WSS **220ⱼ**. As a result, the first of the two different optical paths between WSSes **210ᵢ** and **220ⱼ** includes waveguide **230ᵢⱼ**, optical coupler **360ᵢⱼ**, and waveguide **370ᵢⱼ**. The second of the two different optical paths between WSSes **210ᵢ** and **220ⱼ** includes waveguide **240ᵢ**, optical splitter **250ᵢ**, waveguide **260ᵢⱼ**, optical coupler **360ᵢⱼ**, and waveguide **370ᵢⱼ**. These two different optical paths connect two different respective output ports of the ingress WSS **210ᵢ** to the same input port of the egress WSS **220ⱼ**.

A person of ordinary skill in the art will understand that the embodiment of FIG. 3 potentially enables some or all of the egress WSSes **220ⱼ** to have fewer input ports than in the embodiment of FIG. 2. For example, the number L of input ports in egress WSS **220ⱼ** may now satisfy the following inequality: L≥N+M―1.

FIG. 4 shows a block diagram of an optional optical module **400** that can be used in OXC switch **100** according to an embodiment. Module **400** can be inserted, e.g., at location A indicated in FIGs. 2 and 3. Some embodiments of OXC switch **100** may have up to N―1 modules **400**.

Module **400** comprises an optical amplifier (OA) **410** and a wavelength blocker **420.** If present, optical amplifier **410** can be used, e.g., to pre-compensate optical losses induced by the corresponding downstream optical splitter **250ᵢ** (also see FIGs. 2-3). Wavelength blocker **420** is a configurable band-stop filter that can pass through a selected set of wavelength channels while stopping (blocking) all other wavelength channels. Different instances (nominal copies) of wavelength blocker **420** can be configured to pass through different respective sets of wavelength channels. Wavelength blocker **420** can be implemented using any suitable wavelength-selective device. In some embodiments, wavelength blocker **420** can be implemented using a suitable WSS.

An example frequency grid that is used in fiber-optic communication systems is defined by the ITU-T G.694.1 Recommendation, This frequency grid can bc used, c.g., in the frequency range from about 186 THz to about 201 THz, with a 100, 75, 50, 25, or 12.5-GHz spacing of the channels therein. While defined in frequency units, this grid can equivalently be expressed in wavelength units. For example, in the wavelength range from about 1528.8 nm to about 1563.9 nm, the 100-GHz spacing between the centers of neighboring wavelength channels is equivalent to approximately 0.8 nm spacing. Other frequency grids are also used in fiber-optic communication systems.

The following terms are typically used to refer to certain characteristics of a frequency grid and the corresponding optical signals.

Frequency grid: A reference set of frequencies used to denote nominal central frequencies that may be used for defining specifications and applications.

Frequency slot: The frequency range allocated to a slot and substantially unavailable to other slots within a frequency grid. A frequency slot is defined by its nominal central frequency and its slot width. A frequency slot may also be referred to as a wavelength channel.

Slot width: The full width of a frequency slot in a frequency grid.

Channel spacing: The frequency difference between the nominal central frequencies of two adjacent frequency slots (wavelength channels).

For illustration purposes and without any implied limitations, example embodiments are described below in reference to a flexible frequency grid having a 50-GHz slot width in one spectral band and a 75-GHz slot width in another spectral band. However, embodiments are not limited to this particular grid or these slot widths. From the provided description, a person of ordinary skill in the art will be able to practice various embodiments while using other suitable frequency grids and/or slot widths.

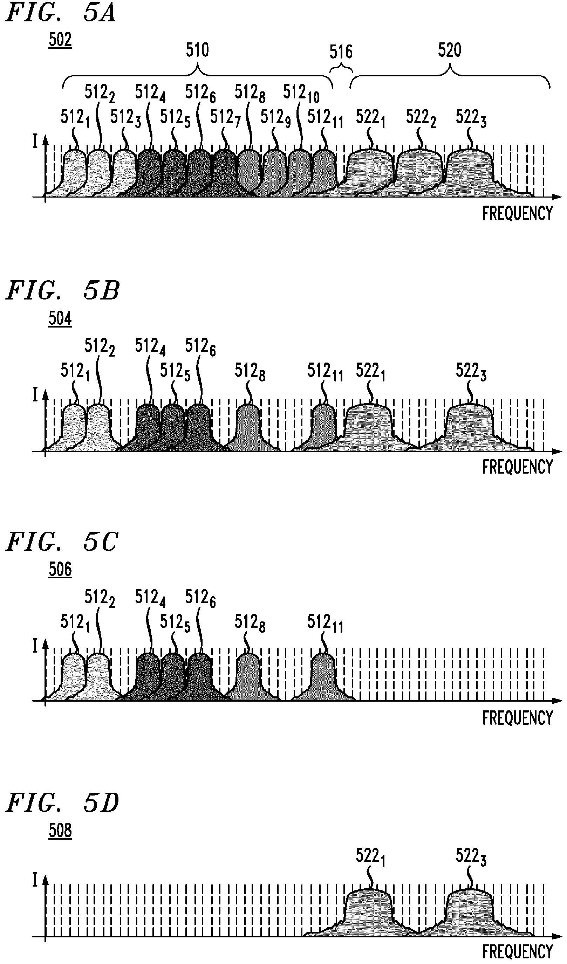

FIGs. 5A-5D graphically show example spectra of WDM signals that can be transmitted through OXC switch **100** according to an embodiment. More specifically, FIG. 5A shows a spectrum **502** of a WDM signal received by ingress WSS **210ᵢ** through fiber **102ᵢ.** FIG. 5B shows a spectrum **504** of a WDM signal transmitted by egress WSS **220ⱼ** through fiber **104ⱼ**. FIG. 5C shows a spectrum **506** of a WDM signal transmitted through waveguide **230ᵢⱼ**. FIG. 5D shows a spectrum **508** of a WDM signal transmitted through waveguide **260ᵢⱼ**. A person of ordinary skill in the art will understand that spectra **502-508** shown in FIGs. 5A-5D are approximate spectra that are presented herein solely to illustrate and/or explain certain technical features of OXC switch **100,** and that some embodiments may be configured to operate on optical signals whose spectra differ from the shown spectra.

The abscissa, which has the same scale in all of FIGs. 5A-5D, indicates the optical frequency. The ordinate in each of FIGs. 5A-5D indicates light intensity (I). The dashed vertical lines are visual guides spaced by 12.5 GHz. A frequency band **510** is divided into 50-GHz frequency slots in accordance with the employed frequency grid. A frequency band **520** is similarly divided into 75-GHz frequency slots in accordance with the employed frequency grid. In some embodiments, neighboring frequency bands **510** and **520,** which have single channel slots of different respective widths, may be separated by an optional guard band **516,** e.g., as indicated in FIG. 5A. In the shown example, optional guard band **516** is spectrally located between the slots that carry WDM components **512₁₁** and **522ᵢ**.

Each of the independently modulated (e.g., data-carrying) optical signals (WDM components) is schematically shown in FIGs. 5A-5D using an example hat-shaped spectral envelope. A person of ordinary skill in the art will understand that each of the modulated optical signals typically has a carrier center band and modulation sidebands, which are not explicitly shown in FIGs. 5A-5D. In general the shapes of individual spectral envelopes depend, *inter alia,* on the type of modulation and the type of filtering applied to the specific WDM component.

Frequency band **510** is illustratively shown as having WDM components **512₁**-**512₁₁**, each generated using a modulation rate of 33 GBd. Each of WDM components **512₁-512₁₁** occupies a respective 50-GHz frequency slot.

Frequency band **520** is illustratively shown as having WDM components **522₁-522₃**, each generated using a modulation rate of 64 GBd. Each of WDM components **522₁-522₃** occupies a respective 75-GHz frequency slot.

In an example embodiment corresponding to FIGs. 5A-5D, WSSes **210** and **220** have spectral pass bands that enable these WSSes to route WDM components **512₁-512₁₁** and **522₁-522₃**, in a reconfigurable manner, between appropriate output ports of ingress WSSes **210** and input ports of egress WSSes **220.** FIGs. 5A-5D graphically illustrate one example of such routing.

Referring to FIG. 5A, spectrum **502** has WDM components **512₁-512₁₁** and **522₁**-**522₃** and represents an input WDM signal received by ingress WSS **210ᵢ** through fiber **102ᵢ** (also see FIG. 2). OXC switch **100** operates to route WDM components **512₁-512₁₁** and **522₁-522₃** in accordance with their intended destinations using appropriate configurations of the ingress WSS **210ᵢ** and the corresponding egress WSSes **220ⱼ**.

Referring to FIG. 5B, spectrum **504** has WDM components **512₁, 512₂, 512₄-512₆**, **512s, 512₁₁**, **522₁**, and **522₃** and represents an output WDM signal applied by a particular egress WSS **220ⱼ** to fiber **104ⱼ** (also see FIG. 2). These WDM components have been routed through fiber-interconnect device **130** to the egress WSS **220ⱼ** as indicated in FIGs. 5C-5D. WDM components **512₃, 512₇, 512₉, 512₁₀,** and **522₂,** which are missing in spectrum **504,** may have been routed through fiber-interconnect device **130** to one or more egress WSSes **220ₖ** (where k≠j) in a manner that is analogous to that indicated in FIGs. 5C-5D or dropped through optical add/drop blocks **150₁-150_{M}.**

Referring to FIG. 5C, spectrum **506** has WDM components **512₁, 512₂, 512₄-512₆**, **512s,** and **512₁₁** and represents an output WDM signal applied by the ingress WSS **210ᵢ** to the output port thereof connected to waveguide **230ᵢⱼ** (also see FIG. 2). The pass bands of the ingress WSS **210ᵢ** corresponding to the latter output port have 50-GHz bandwidths and match the frequency slots of band **510.** The ingress WSS **210ᵢ** may be configured to direct WDM components **512₁, 512₂, 512₄-512₆**, **512s,** and **512₁₁** through waveguide **230ᵢⱼ**, e.g., because it may be beneficial for these WDM components to go through an optical path characterized by relatively good optical isolation stemming from the double band-pass filtering caused by the corresponding 50-GHz pass bands of WSSes **210ᵢ** and **220ⱼ**.

Referring to FIG. 5D, spectrum **508** has WDM components **522₁** and **522₃** and represents an input WDM signal received by egress WSS **220ⱼ** through the input port thereof connected to waveguide **260ᵢⱼ** (also see FIG. 2). The pass bands of the egress WSS **220ⱼ** corresponding to the latter input port have 75-GHz bandwidths and match the frequency slots of band **520.** Ingress WSS **210ᵢ** may be configured to direct WDM components **522₁** and **522₃** through waveguide **240ᵢ** connected to waveguide **260ᵢⱼ**, e.g., because it may be beneficial for these WDM components to go through an optical path characterized by relatively low amounts of narrow band-pass filtering enabled by the corresponding 75-GHz pass bands of WSSes **210ᵢ** and **220ⱼ**.

Some embodiments of OXC switch **100** described above in reference to FIGs. 1-5 may enable the following engineering considerations and/or concerns to be addressed in a satisfactory manner.

As indicated above, fiber-interconnect device **130** may provide two different optical paths between an ingress WSS **210ᵢ** and an egress WSS **220ⱼ**, e.g., as shown in FIG. 2. In some embodiments, to further reduce the amounts of narrow band-pass filtering at ingress WSS **210ᵢ** for the WDM components directed through waveguide **240ᵢ** and optical splitter **250ᵢ** (FIG. 2), the ingress WSS may be configured to have additional guard bands for the 75-GHz channels. However, these additional guard bands may disadvantageously decrease the overall spectral efficiency. To mitigate or avoid this potential drawback, some embodiments may be designed to use different distinct, contiguous spectral bands for the 75-GHz and 50-GHz channels, respectively. In some embodiments, such spectral bands may be analogous to bands **510** and **520** (FIG. 5A). In such embodiments, the WDM components corresponding to the 75-GHz channels may not undergo any penalizing narrow-band filtering when passing through ingress WSS **210ᵢ** because the entire band of those channels, e.g., analogous to band **520** (FIG. 5A), can be routed as a single entity without being subjected to any extra filtering at the edges of the individual channels. The resulting filtering impact of ingress WSS **210ᵢ** on the 75-GHz channels routed in this manner may be minimal.

To mitigate the additional optical losses imposed by optical splitters **250ᵢ** on the channels routed therethrough, one optical amplifier **410** (FIG. 4) per ingress WSS **210ᵢ** can be inserted in some embodiments, e.g., at locations A indicated in FIGs. 2 and 3. Such an optical amplifier can be packaged on the same pack as the corresponding ingress WSS **210ᵢ** at a reasonable cost, e.g., because the total output power of the amplifier might not need to exceed 15 dBm. The cost can further be lowered if the percentage of wavelength channels directed through waveguides **240ᵢ** and optical splitters **250ᵢ** is limited, for instance, to less than 50%.

Wavelength blockers **420** can be used to mitigate potential OSNR degradation due to the wide-band noise of optical amplifiers **410.** It may be advantageous to design wavelength blockers **420** such that the signals passing therethrough are not subjected to tight band-pass filtering.

Optical couplers **360ᵢⱼ** can be asymmetric. For example, a 30/70 coupler **360ᵢⱼ,** the 70% port of which is connected to waveguide **230ᵢⱼ**, will add only a ~2 dB insertion loss for the corresponding optical path. Even though the 30/70 coupler **360ᵢⱼ** will add a ~5 dB insertion loss for the optical path connected to the 30% port, this loss can be easily compensated by the corresponding optical amplifier **410.** Additional wavelength blockers **420** may then be used to protect the signals going through waveguide **230ᵢⱼ** from potential OSNR degradation due to the wide-band noise of optical amplifiers **410** in embodiments employing optical couplers **360**_{**ij**.} Ingress WSSes **210** may also need to be configured such that the optical isolation between the wavelength channels therein is relatively strong, e.g., better than 35 dB, to reduce detrimental in-band crosstalk for the channels recombined by optical couplers **360ᵢⱼ**.

In general, the choice of the configuration of the OXC switch and of the optical paths therethrough may be based on any number of pertinent criteria. For example, some sets of criteria may primarily be based on comparing the relative sensitivities to filtering and optical crosstalk, with some additional criteria being directed at saving as much of the spectral resource as possible (e.g., by reducing spectral guard bands). These and other pertinent characteristics may not depend exclusively on the channel bandwidths. For example, the quality of the clock recovery applied to the channel when it is detected and the constellation size and type may also meaningfully influence the routing choices for each individual channel going through the OXC switch. As a result, in some embodiments, some of WDM components **512** may be routed through waveguide **240ᵢ**, whereas some of WDM components **522** may be routed through waveguide **230ᵢⱼ**.

Some embodiments can be constructed to leverage recent advances in the LCoS technology, based on which a corresponding WSS can be designed to have at least some of the following features: (i) be programmable, e.g., to implement a desired channel configuration, including customizable frequency slots, grids, guard bands, etc., and (ii) have a relatively high spatial resolution to enable implementations of sharper (at the edges) and/or flatter (in the middle) filtering functions than those enabled by the previous LCoS generation (e.g., commercially produced before the year 2014).

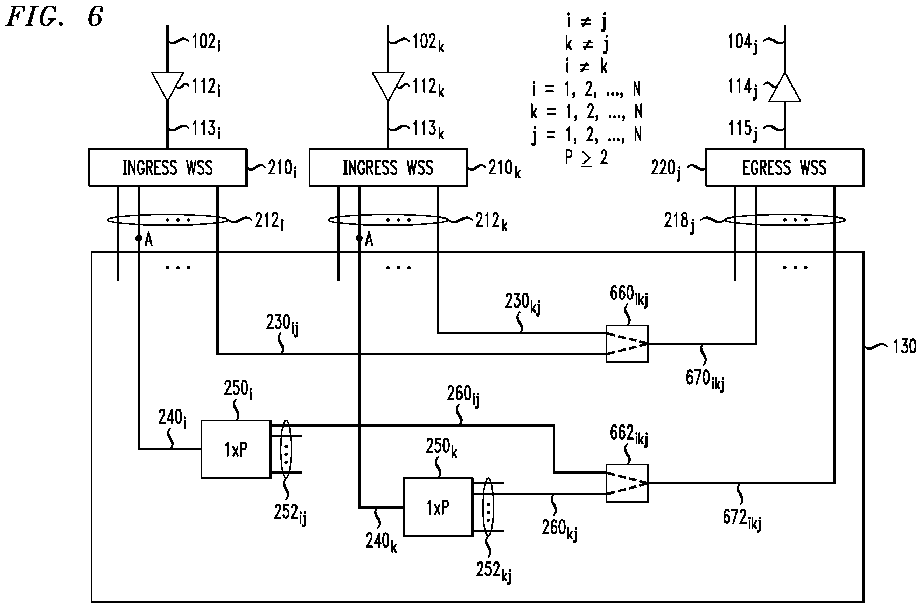

FIG. 6 schematically shows some of the optical paths in OXC switch **100** according to yet another embodiment. Although the embodiment of FIG. 6 is functionally similar to the embodiment of FIG. 3, the embodiment of FIG. 6 differs from the embodiment of FIG. 3 in the manner in which the 2×1 optical couplers are connected between the corresponding ingress and egress WSSes. More specifically, in the embodiment of FIG. 6, fiber-interconnect device **130** comprises a plurality of 2×1 optical couplers **660ᵢₖⱼ** and a plurality of 2×1 optical couplers **662ᵢₖⱼ** connected as explained below. In an example embodiment, each of optical couplers **660** and **662** can be similar to the above-described optical coupler **360** (FIG. 3).

Each of optical couplers **660ᵢₖⱼ** is configured to join one of the two optical paths between WSSes **210ᵢ** and **220ⱼ** and one of the two optical paths between WSSes **210ₖ** and **220ⱼ** prior to connecting both paths to the egress WSS **220ⱼ**. Each of optical couplers **662ᵢₖⱼ** is similarly configured to join the other one of the two optical paths between WSSes **210ᵢ** and **220ⱼ** and the other one of the two optical paths between WSSes **210ₖ** and **220ⱼ** prior to connecting both paths to the egress WSS **220ⱼ**.

Optical coupler **660ᵢₖⱼ** connects both optical waveguides **230ᵢⱼ** and **230ₖⱼ** to an optical waveguide **670ᵢₖⱼ**, which is connected to the corresponding input port of egress WSS **220ⱼ**. As a result, the first of the two different optical paths between WSSes **210ᵢ** and **220ⱼ** includes waveguide **230ᵢⱼ**, optical coupler **660ᵢₖⱼ**, and waveguide **670ᵢₖⱼ**. The first of the two different optical paths between WSSes **210ₖ** and **220ⱼ** includes waveguide **230ₖⱼ,** optical coupler **660ᵢₖⱼ**, and waveguide **670ᵢₖⱼ.** Waveguide **670ᵢₖⱼ** connects the two optical paths joined thereby to the same respective input port of the egress WSS **220ⱼ**.

Optical coupler **662ᵢₖⱼ** connects both optical waveguides **260ᵢⱼ** and **260ₖⱼ** to an optical waveguide **672ᵢₖⱼ,** which is connected to another corresponding input port of egress WSS **220ⱼ**. As a result, the second of the two different optical paths between WSSes **210ᵢ** and **220ⱼ** includes waveguide **240ᵢ**, optical splitter **250ᵢ**, waveguide **260ᵢⱼ**, optical coupler **662ᵢₖⱼ,** and waveguide **672ᵢₖⱼ**. The second of the two different optical paths between WSSes **210ₖ** and **220ⱼ** includes waveguide **240ₖ**, optical splitter **250ₖ** waveguide **260ₖⱼ**, optical coupler **662ᵢₖⱼ,** and waveguide **672ᵢₖⱼ.** Waveguide **672ᵢₖⱼ** connects the two optical paths joined thereby to the same respective input port of the egress WSS **220ⱼ**.

In some embodiments, fiber-interconnect device **130** shown in FIG. 6 can be modified to swap the connections of waveguides **230ᵢⱼ** and **260ᵢⱼ** such that waveguide **230ᵢⱼ** is connected to optical coupler **662ᵢₖⱼ** while waveguide **260ᵢⱼ** is connected to optical coupler **660ᵢₖⱼ.**

Some embodiments may be constructed such that an ingress WSS **210** and one corresponding wavelength blocker **420** are integrated into the same module. This integration can be done in a relatively straightforward manner, e.g., because most of the commercially available flexible-grid WSSes and wavelength blockers feature the same LCoS technology and the same integration technology. In fact, in some embodiment, wavelength blocker **420** can be implemented as a 1 × 1 WSS.

Some embodiments can potentially be leveraged to develop novel wavelength-routing approaches. For example, in cases of 300 Gb/s PDM-8QAM and 400 Gb/s PDM-16QAM, the adverse effects of tight filtering and optical crosstalk may be comparable or not predictable *a priori.* In this context, the two different optical paths between an ingress WSS **210** and an egress WSS **220** may be tested, e.g., during the execution of the resource-reservation protocol, to determine which of the optical performs better for the signal in question. The better-performing optical path can then be selected for transmitting the corresponding payload signals during normal operation of the OXC switch.

Additional flexibility in the ways the above-described OXC-switch architecture can be leveraged to meet the specifications of a particular application is provided by embodiments of OXC switch **100** having fewer than the above-indicated maximum number of optical splitters **250ᵢ**. In such embodiments, some pairs of WSSes **210** and **220** are connected by a single respective optical path while some other pairs of WSSes **210** and **220** are connected by two respective optical paths. As indicated above, the number of optical splitters **250ᵢ**; also has an impact on the sizes of WSSes **210** and **220** used in the OXC switch. Depending on the particular application, one can decide whether to implement a connection between two particular degrees of the OXC switch using a single respective optical path or two respective optical paths and then design fiber-interconnect device **130** and select the sizes of WSSes **210** and **220** accordingly.

According to an example embodiment described above, e.g., in the summary section and/or in reference to any one or any combination of some or all of FIGs. 1-6, provided is an apparatus (e.g., **100,** FIG. 1) comprising: a plurality of ingress wavelength-selective switches (e.g., **210,** FIG. 2), each having a respective input port (e.g., **113,** FIG. 1) and a respective set of output ports (e.g., at **212,** FIG. 2); a plurality of egress wavelength-selective switches (e.g., **220,** FIG. 2), each having a respective output port (e.g., **115,** FIG. 1) and a respective set of input ports (e.g., at **218,** FIG. 2); and an interconnect device (e.g., **130,** FIG. 1) configured to optically connect the output ports of the ingress wavelength-selective switches and the input ports of the egress wavelength-selective switches using optical waveguides (e.g., **230, 240, 260, 370,** FIGs. 2, 3); and wherein, for at least some pairs of the ingress and egress wavelength-selective switches optically connected by the optical waveguides, the interconnect device is configured to: optically connect (e.g., through **230ᵢⱼ**, FIGs. 2, 3) one of the output ports of a respective ingress wavelength-selective switch (e.g., **210ᵢ**, FIGs. 2, 3) to one of the input ports of a respective egress wavelength-selective switch (e.g., **220ⱼ**, FIG. 2); and optically connect (e.g., through **260ᵢⱼ**, FIGs. 2, 3) a different one of the output ports of the respective ingress wavelength-selective switch to said one of the input ports (e.g., as in FIG. 3) or to a different one of the input ports (e.g., as in FIG. 2) of the respective egress wavelength-selective switch.

In some embodiments of the above apparatus, the interconnect device comprises an optical splitter (e.g., **250ᵢ**, FIGs. 2, 3) having an optical input (e.g., **248ᵢ**, FIGs. 2, 3) and a plurality of optical outputs (e.g., **252ᵢⱼ,** FIGs. 2, 3), the optical input being optically connected (e.g., using **240ᵢ**, FIGs. 2, 3) to said different one of the output ports of the respective ingress wavelength-selective switch, one of the optical outputs being optically connected (e.g., using **260ᵢⱼ**, FIGs. 2, 3) to said one of the input ports or to said different one of the input ports of the respective egress wavelength-selective switch.

In some embodiments of any of the above apparatus, another one of the optical outputs of the optical splitter is optically connected to an input port of another egress wavclcngth-sclcctivc switch.

In some embodiments of any of the above apparatus, each of the optical outputs of the optical splitter is optically connected to an input port of a different respective egress wavelength-selective switch.

In some embodiments of any of the above apparatus, the interconnect device further comprises an optical coupler (e.g., **360ᵢⱼ,** FIG. 3) having first and second optical inputs and an optical output, the first optical input being optically connected (e.g., through **230ᵢⱼ**, FIG. 3) to said one of the output ports of the respective ingress wavelength-selective switch, the second optical input being optically connected (e.g., through **260ᵢⱼ**, FIG. 3) to said one of the outputs of the optical splitter, the optical output of the optical coupler being optically connected (e.g., through **370ᵢⱼ**, FIG. 3) to said one of the input ports of the respective egress wavelength-selective switch.

In some embodiments of any of the above apparatus, the apparatus further comprises a degree-N optical cross-connect switch, where N is an integer greater than two; and wherein the optical splitter has N-1 optical outputs.

In some embodiments of any of the above apparatus, the interconnect device comprises N optical splitters, each having N-1 optical outputs, each of the N―1 optical outputs being optically connected to an input port of a different respective egress wavelength-selective switch.

In some embodiments of any of the above apparatus, the interconnect device comprises an optical coupler (e.g., **360ᵢⱼ,** FIG. 3) having first and second optical inputs and an optical output, the first optical input being optically connected (e.g., through **230ᵢⱼ**, FIG. 3) to said one of the output ports of the respective ingress wavelength-selective switch, the second optical input being optically connected (e.g., through **260ᵢⱼ**, **250ᵢ**, **240ᵢ**, FIG. 3) to said different one of the output ports of the respective ingress wavelength-selective switch, the optical output of the optical coupler being optically connected (e.g., through **370ᵢⱼ**, FIG. 3) to said one of the input ports of the respective egress wavelength-selective switch.

In some embodiments of any of the above apparatus, the apparatus further comprises a degree-N optical cross-connect switch, where N is an integer greater than two; and wherein the interconnect device comprises N(N-1) 2×1 optical couplers (e.g., **360ᵢⱼ,** FIG. 3) connected to the optical waveguides.

In some embodiments of any of the above apparatus, the interconnect device comprises N optical splitters, each having N-1 optical outputs, each of the N―1 optical outputs being optically connected to an input port of a different respective egress wavelength-selective switch by way of a respective one of the N(N-1) 2×1 optical couplers.

In some embodiments of any of the above apparatus, the interconnect device comprises: a first optical coupler (e.g., **660ᵢₖⱼ**, FIG. 6) having first and second optical inputs and an optical output, the optical output of the first optical coupler being optically connected (e.g., through **670ᵢₖⱼ**, FIG. 6) to one of the input ports of a corresponding egress wavelength-selective switch, the first optical input of the first optical coupler being optically connected (e.g., through **230ᵢⱼ**, FIG. 6) to one of the output ports of a first respective ingress wavelength-selective switch (e.g., **210ᵢ**, FIG. 6), the second optical input of the first optical coupler being optically connected (e.g., through **230ₖⱼ**, FIG. 6) to one of the output ports of a second respective ingress wavelength-selective switch (e.g., **210ₖ**, FIG. 6); and a second optical coupler (e.g., **662ᵢₖⱼ,** FIG. 6) having first and second optical inputs and an optical output, the optical output of the second optical coupler being optically connected (e.g., through **672ᵢₖⱼ**, FIG. 6) to another one of the input ports of the corresponding egress wavelength-selective switch, the first optical input of the second optical coupler being optically connected (e.g., through **260ᵢⱼ**, **250ᵢ**, and **240ᵢ**, FIG. 6) to another one of the output ports of the first respective ingress wavelength-selective switch, the second optical input of the second optical coupler being optically connected (e.g., through **260ₖⱼ, 250ₖ,** and **240ₖ,** FIG. 6) to another one of the output ports of the second respective ingress wavelength-selective switch.

In some embodiments of any of the above apparatus, the interconnect device is configured to optically connect (e.g., through **260ᵢⱼ**, **250ᵢ**, **240ᵢ**, FIG. 2) said different one of the output ports of the respective ingress wavelength-selective switch to said different one of the input ports of the respective egress wavelength-selective switch.

In some embodiments of any of the above apparatus, the apparatus further comprises a wavelength blocker (e.g., **420,** FIG. 1) coupled between said different one of the output ports of the respective ingress wavelength-selective switch and the interconnect device.

In some embodiments of any of the above apparatus, the apparatus further comprises an optical amplifier (e.g., **410,** FIG. 1) serially connected with wavelength blocker and coupled between said different one of the output ports of the respective ingress wavelength-selective switch and the interconnect device.

In some embodiments of any of the above apparatus, each of the ingress wavelength-selective switches has K output ports; and each of the egress wavelength-selective switches has L input ports, where L>K.

In some embodiments of any of the above apparatus, the respective ingress wavelength-selective switch has a first set of wavelength channels (e.g., **512,** FIG. 5A), each having a first slot width, and a second set of wavelength channels (e.g., **522,** FIG. 5A), each having a second slot width different from the first slot width.

In some embodiments of any of the above apparatus, the respective ingress wavelength-selective switch is configurable to: route optical signals of the first set of wavelength channels to said one of the output ports thereof; and route optical signals of the second set of wavelength channels to said different one of the output ports thereof.

In some embodiments of any of the above apparatus, the respective ingress wavelength-selective switch is configured to: have the first set of wavelength channels arranged within a first spectral band (e.g., **510,** FIG. 5A); and have the second set of wavelength channels arranged within a second spectral band (e.g., **520,** FIG. 5A), the second spectral band being distinct from (e.g., having no common wavelengths with) the first spectral band.

In some embodiments of any of the above apparatus, the apparatus further comprises a plurality of optical add/drop blocks (e.g., **150,** FIG. 1); and wherein the interconnect device is further configured to: optically connect the output ports of the ingress wavelength-selective switches to at least some of the optical add/drop blocks; and optically connect the input ports of the egress wavelength-selective switches to at least some of the optical add/drop blocks.

In some embodiments of any of the above apparatus, the plurality of egress wavelength-selective switches has N egress wavelength-selective switches, where N is an integer greater than one; the plurality of ingress wavelength-selective switches has N ingress wavelength-selective switches; the plurality of optical add/drop blocks has M optical add/drop blocks, where M is an integer greater than one; each of the ingress wavelength-selective switches has K output ports, where K≥N+M; and each of the egress wavelength-selective switches has L input ports, where L≥2N+M-2.

While this disclosure includes references to illustrative embodiments, this specification is not intended to be construed in a limiting sense. Various modifications of the described embodiments, as well as other embodiments within the scope of the disclosure, which are apparent to persons skilled in the art to which the disclosure pertains are deemed to lie within the principle and scope of the disclosure, e.g., as expressed in the following claims.

Unless explicitly stated otherwise, each numerical value and range should be interpreted as being approximate as if the word "about" or "approximately" preceded the value or range.

It will be further understood that various changes in the details, materials, and arrangements of the parts which have been described and illustrated in order to explain the nature of this disclosure may be made by those skilled in the art without departing from the scope of the disclosure, e.g., as expressed in the following claims.

Reference herein to "one embodiment" or "an embodiment" means that a particular feature, structure, or characteristic described in connection with the embodiment can be included in at least one embodiment of the disclosure. The appearances of the phrase "in one embodiment" in various places in the specification are not necessarily all referring to the same embodiment, nor are separate or alternative embodiments necessarily mutually exclusive of other embodiments. The same applies to the term "implementation."

Unless otherwise specified herein, the use of the ordinal adjectives "first," "second," "third," etc., to refer to an object of a plurality of like objects merely indicates that different instances of such like objects are being referred to, and is not intended to imply that the like objects so referred-to have to be in a corresponding order or sequence, either temporally, spatially, in ranking, or in any other manner.

Also for purposes of this description, the terms "couple," "coupling," "coupled," "connect," "connecting," or "connected" refer to any manner known in the art or later developed in which energy is allowed to be transferred between two or more elements, and the interposition of one or more additional elements is contemplated, although not required. Conversely, the terms "directly coupled," "directly connected," etc., imply the absence of such additional elements.

The described embodiments are to be considered in all respects as only illustrative and not restrictive. In particular, the scope of the disclosure is indicated by the appended claims rather than by the description and figures herein. All changes that come within the meaning and range of equivalency of the claims are to be embraced within their scope.

The description and drawings merely illustrate the principles of the disclosure. It will thus be appreciated that those of ordinary skill in the art will be able to devise various arrangements that, although not explicitly described or shown herein, embody the principles of the disclosure and are included within its scope. Furthermore, all examples recited herein are principally intended expressly to be only for pedagogical purposes to aid the reader in understanding the principles of the disclosure and the concepts contributed by the inventor(s) to furthering the art, and are to be construed as being without limitation to such specifically recited examples and conditions. Moreover, all statements herein reciting principles, aspects, and embodiments of the disclosure, as well as specific examples thereof, are intended to encompass equivalents thereof.

## Claims

1. An apparatus (100) comprising:
a plurality of ingress wavelength-selective switches (210), each having a respective input port and a respective set of output ports;
a plurality of egress wavelength-selective switches (220), each having a respective output port and a respective set of input ports; and
an interconnect device (130) configured to optically connect the output ports of the ingress wavelength-selective switches (210) and the input ports of the egress wavelength-selective switches (220) using optical waveguides; and
wherein, for at least some pairs of the ingress and egress wavelength-selective switches optically connected through the optical waveguides, the interconnect device (130) is configured to:
a) optically connect one of the output ports of a respective ingress wavelength-selective switch to one of the input ports of a respective egress wavelength-selective switch; and
optically connect a different one of the output ports of the respective ingress wavelength-selective switch to said one of the input ports, or
b) optically connect one of the output ports of a respective ingress wavelength-selective switch to one of the input ports of a respective egress wavelength-selective switch and optically connect a different one of the output ports of the respective ingress wavelength-selective switch to a different one of the input ports of the respective egress wavelength-selective switch.

2. The apparatus (100) of claim 1, wherein the interconnect device (130) comprises an optical splitter (250ᵢ_)having an optical input and a plurality of optical outputs, the optical input being optically connected to said different one of the output ports of the respective ingress wavelength-selective switch, one of the optical outputs being optically connected to said one of the input ports or to said different one of the input ports of the respective egress wavelength-selective switch.

3. The apparatus (100) of claim 2, wherein another one of the optical outputs of the optical splitter is optically connected to an input port of another egress wavelength-selective switch.

4. The apparatus (100) of claim 2, wherein each of the optical outputs of the optical splitter is optically connected to an input port of a different respective egress wavelength-selective switch.

5. The apparatus (100) of claim 2, wherein the interconnect device (130) further comprises an optical coupler (360ᵢ_)having first and second optical inputs and an optical output, the first optical input being optically connected to said one of the output ports of the respective ingress wavelength-selective switch, the second optical input being optically connected to said one of the outputs of the optical splitter, the optical output of the optical coupler being optically connected to said one of the input ports of the respective egress wavelength-selective switch.

6. The apparatus (100) of claim 2, further comprising a degree-N optical cross-connect switch, where N is an integer greater than two; and
wherein the optical splitter has N-1 optical outputs.

7. The apparatus (100) of claim 6, wherein the interconnect device (130) comprises N optical splitters, each having N―1 optical outputs, each of the N―1 optical outputs being optically connected to an input port of a different respective egress wavelength-selective switch.

8. The apparatus (100) of claim 1, wherein the interconnect device (130) comprises an optical coupler having first and second optical inputs and an optical output, the first optical input being optically connected to said one of the output ports of the respective ingress wavelength-selective switch, the second optical input being optically connected to said different one of the output ports of the respective ingress wavelength-selective switch, the optical output of the optical coupler being optically connected to said one of the input ports of the respective egress wavelength-selective switch.

9. The apparatus (100) of claim 8, further comprising a degree-N optical cross-connect switch, where N is an integer greater than two; and
wherein the interconnect device comprises N(N―1) 2×1 optical couplers connected to the optical waveguides.

10. The apparatus (100) of claim 9, wherein the interconnect device (130) comprises N optical splitters, each having N―1 optical outputs, each of the N―1 optical outputs being optically connected to an input port of a different respective egress wavelength-selective switch by way of a respective one of the N(N―1) 2×1 optical couplers.

11. The apparatus (100) of claim 1, wherein the interconnect device (130) comprises:
a first optical coupler having first and second optical inputs and an optical output, the optical output of the first optical coupler being optically connected to one of the input ports of a corresponding egress wavelength-selective switch, the first optical input of the first optical coupler being optically connected to one of the output ports of a first respective ingress wavelength-selective switch, the second optical input of the first optical coupler being optically connected to one of the output ports of a second respective ingress wavelength-selective switch; and
a second optical coupler having first and second optical inputs and an optical output, the optical output of the second optical coupler being optically connected to another one of the input ports of the corresponding egress wavelength-selective switch, the first optical input of the second optical coupler being optically connected to another one of the output ports of the first respective ingress wavelength-selective switch, the second optical input of the second optical coupler being optically connected to another one of the output ports of the second respective ingress wavelength-selective switch.

12. The apparatus (100) of claim 1, wherein the interconnect device (130) is configured to optically connect said different one of the output ports of the respective ingress wavelength-selective switch to said different one of the input ports of the respective egress wavelength-selective switch.

13. The apparatus (100) of claim 1, further comprising a wavelength blocker coupled between said different one of the output ports of the respective ingress wavelength-selective switch and the interconnect device (130).

14. The apparatus (100) of claim 13, further comprising an optical amplifier (410) serially connected with wavelength blocker (420) and coupled between said different one of the output ports of the respective ingress wavelength-selective switch and the interconnect device (130).

15. The apparatus (100) of claim 1,
wherein each of the ingress wavelength-selective switches has K output ports; and
wherein each of the egress wavelength-selective switches has L input ports, where L>K.

16. The apparatus (100) of claim 1, wherein the respective ingress wavelength-selective switch has a first set of wavelength channels, each having a first slot width, and a second set of wavelength channels, each having a second slot width different from the first slot width.

17. The apparatus (100) of claim 16, wherein the respective ingress wavelength-selective switch is configurable to:
route optical signals of the first set of wavelength channels to said one of the output ports thereof; and
route optical signals of the second set of wavelength channels to said different one of the output ports thereof.

18. The apparatus (100) of claim 16, wherein the respective ingress wavelength-selective switch is configured to:
have the first set of wavelength channels arranged within a first spectral band; and
have the second set of wavelength channels arranged within a second spectral band, the second spectral band being distinct from the first spectral band.

19. The apparatus (100) of claim 1, further comprising a plurality of optical add/drop blocks; and
wherein the interconnect device (130) is further configured to:
optically connect the output ports of the ingress wavelength-selective switches to at least some of the optical add/drop blocks; and
optically connect the input ports of the egress wavelength-selective switches to at least some of the optical add/drop blocks.

20. The apparatus (100) of claim 19, wherein:
the plurality of egress wavelength-selective switches has N egress wavelength-selective switches, where N is an integer greater than one;
the plurality of ingress wavelength-selective switches has N ingress wavelength-selective switches;
the plurality of optical add/drop blocks has M optical add/drop blocks, where M is an integer greater than one;
each of the ingress wavelength-selective switches has K output ports, where K≥N+M; and
each of the egress wavelength-selective switches has L input ports, where L≥2N+M-2.

## Patentansprüche

1. Einrichtung (100), die Folgendes umfasst:
eine Vielzahl von wellenlängenselektiven Eingangsschaltern (210), von denen jeder einen jeweiligen Eingangsanschluss und einen jeweiligen Satz von Ausgangsanschlüssen aufweist;
eine Vielzahl von wellenlängenselektiven Ausgangsschaltern (220), von denen jeder einen jeweiligen Ausgangsanschluss und einen jeweiligen Satz von Eingangsanschlüssen aufweist; und
eine Verbindungsvorrichtung (130), die dazu ausgelegt ist, die Ausgangsanschlüsse der wellenlängenselektiven Eingangsschalter (210) und die Eingangsanschlüsse der wellenlängenselektiven Ausgangsschalter (220) unter Verwendung von Lichtwellenleitern zu verbinden; und
wobei die Verbindungsvorrichtung (130) für mindestens einige Paare der wellenlängenselektiven Eingangs- und Ausgangsschalter, die über die Lichtwellenleiter verbunden sind, zu Folgendem ausgelegt ist:
a) optisches Verbinden von einem der Ausgangsanschlüsse eines jeweiligen wellenlängenselektiven Eingangsschalters mit einem der Eingangsanschlüsse eines jeweiligen wellenlängenselektiven Ausgangsschalters; und
optisches Verbinden von einem anderen der Ausgangsanschlüsse des jeweiligen wellenlängenselektiven Eingangsschalters mit dem der Eingangsanschlüsse, oder
b) optisches Verbinden von einem der Ausgangsanschlüsse eines jeweiligen wellenlängenselektiven Eingangsschalters mit einem der Eingangsanschlüsse eines jeweiligen wellenlängenselektiven Ausgangsschalters und optisches Verbinden eines anderen der Ausgangsanschlüsse des jeweiligen wellenlängenselektiven Eingangsschalters mit einem anderen der Eingangsanschlüsse des jeweiligen wellenlängenselektiven Ausgangsschalters.

2. Einrichtung (100) nach Anspruch 1, wobei die Verbindungsvorrichtung (130) einen optischen Splitter (250ᵢ) mit einem optischen Eingang und einer Vielzahl von optischen Ausgängen umfasst, wobei der optische Eingang mit dem anderen der Ausgangsanschlüsse des jeweiligen wellenlängenselektiven Eingangsschalters optisch verbunden ist, wobei einer der optischen Ausgänge mit dem einen der Eingangsanschlüsse oder mit dem anderen der Eingangsanschlüsse des jeweiligen wellenlängenselektiven Ausgangsschalters optisch verbunden ist.

3. Einrichtung (100) nach Anspruch 2, wobei ein anderer der optischen Ausgänge des optischen Splitters mit einem Eingangsanschluss des anderen wellenlängenselektiven Ausgangsschalters optisch verbunden ist.

4. Einrichtung (100) nach Anspruch 2, wobei jeder der optischen Ausgänge des optischen Splitters mit einem Eingangsanschluss eines anderen jeweiligen wellenlängenselektiven Ausgangsschalters optisch verbunden ist.

5. Einrichtung (100) nach Anspruch 2, wobei die Verbindungsvorrichtung (130) ferner einen Optokoppler (360ᵢ) mit einem ersten und einem zweiten optischen Eingang und einem optischen Ausgang umfasst, wobei der erste optische Eingang mit einem der Ausgangsanschlüsse des jeweiligen wellenlängenselektiven Eingangsschalters optisch verbunden ist, wobei der zweite optische Eingang mit dem einen der Ausgänge des optischen Splitters optisch verbunden ist, wobei der optische Ausgang des Optokopplers mit dem einen der Eingangsanschlüsse des jeweiligen wellenlängenselektiven Ausgangsschalters optisch verbunden ist.

6. Einrichtung (100) nach Anspruch 2, die ferner einen optischen Grad-N-Kreuzverteiler umfasst, wo N eine Ganzzahl größer als zwei ist; und
wobei der optische Splitter N―1 optische Ausgänge aufweist.

7. Einrichtung (100) nach Anspruch 6, wobei die Verbindungsvorrichtung (130) N optische Splitter umfasst, von denen jeder N―1 optische Ausgänge aufweist, wobei jeder der N-1 optischen Ausgänge mit einem Eingangsanschluss eines anderen jeweiligen wellenlängenselektiven Ausgangsschalters optisch verbunden ist.

8. Einrichtung (100) nach Anspruch 1, wobei die Verbindungsvorrichtung (130) einen Optokoppler mit einem ersten und einem zweiten optischen Eingang und einem optischen Ausgang umfasst, wobei der erste optische Eingang mit einem der Ausgangsanschlüsse des jeweiligen wellenlängenselektiven Eingangsschalters optisch verbunden ist, wobei der zweite optische Eingang mit dem anderen der Ausgangsanschlüsse des jeweiligen wellenlängenselektiven Eingangsschalters optisch verbunden ist, wobei der optische Ausgang des Optokopplers mit dem einen der Eingangsanschlüsse des jeweiligen wellenlängenselektiven Ausgangsschalters optisch verbunden ist.

9. Einrichtung (100) nach Anspruch 8, die ferner einen optischen Grad-N-Kreuzverteiler umfasst, wo N eine Ganzzahl größer als zwei ist; und
wobei die Verbindungsvorrichtung N(N-1) 2x1 Optokoppler umfasst, die mit den Lichtwellenleitern verbunden sind.

10. Einrichtung (100) nach Anspruch 9, wobei die Verbindungsvorrichtung (130) N optische Splitter umfasst, von denen jeder N―1 optische Ausgänge aufweist, wobei jeder der N-1 optischen Ausgänge über einen jeweiligen der N(N―1) 2x1 Optokoppler mit einem Eingangsanschluss eines anderen jeweiligen wellenlängenselektiven Ausgangsschalters optisch verbunden ist.

11. Einrichtung (100) nach Anspruch 1, wobei die Verbindungsvorrichtung (130) Folgendes umfasst:
einen ersten Optokoppler mit einem ersten und einem zweiten optischen Eingang und einem optischen Ausgang, wobei der optische Ausgang des ersten Optokopplers mit einem der Eingangsanschlüsse eines entsprechenden wellenlängenselektiven Ausgangsschalters optisch verbunden ist, wobei der erste optische Eingang des ersten Optokopplers mit einem der Ausgangsanschlüsse eines ersten jeweiligen wellenlängenselektiven Eingangsschalters optisch verbunden ist, wobei der zweite optische Eingang des ersten Optokopplers mit einem der Ausgangsanschlüsse eines zweiten jeweiligen wellenlängenselektiven Eingangsschalters optisch verbunden ist; und
einen zweiten Optokoppler mit einem ersten und einem zweiten optischen Eingang und einem optischen Ausgang, wobei der optische Ausgang des zweiten Optokopplers mit einem anderen der Eingangsanschlüsse des entsprechenden wellenlängenselektiven Ausgangsschalters optisch verbunden ist, wobei der erste optische Eingang des zweiten Optokopplers mit einem anderen der Ausgangsanschlüsse des ersten jeweiligen wellenlängenselektiven Eingangsschalters optisch verbunden ist, wobei der zweite optische Eingang des zweiten Optokopplers mit einem anderen der Ausgangsanschlüsse des zweiten jeweiligen wellenlängenselektiven Eingangsschalters optisch verbunden ist.

12. Einrichtung (100) nach Anspruch 1, wobei die Verbindungsvorrichtung (130) dazu ausgelegt ist, den anderen der Ausgangsanschlüsse des jeweiligen wellenlängenselektiven Eingangsschalters mit dem anderen der Eingangsanschlüsse des jeweiligen wellenlängenselektiven Ausgangsschalters optisch zu verbinden.

13. Einrichtung (100) nach Anspruch 1, die ferner einen Wellenlängenblockierer umfasst, der zwischen dem anderen der Ausgangsanschlüsse des jeweiligen wellenlängenselektiven Eingangsschalters und der Verbindungsvorrichtung (130) gekoppelt ist.

14. Einrichtung (100) nach Anspruch 13, die ferner einen optischen Verstärker (410) umfasst, der mit dem Wellenlängenblockierer (420) in Reihe verbunden und zwischen dem anderen der Ausgangsanschlüsse des jeweiligen wellenlängenselektiven Eingangsschalters und der Verbindungsvorrichtung (130) gekoppelt ist.

15. Einrichtung (100) nach Anspruch 1,
wobei jeder der wellenlängenselektiven Eingangsschalter K Ausgangsanschlüsse aufweist; und
wobei jeder der wellenlängenselektiven Ausgangsschalter L Eingangsanschlüsse aufweist, wo L>K.

16. Einrichtung (100) nach Anspruch 1, wobei der jeweilige wellenlängenselektive Eingangsschalter einen ersten Satz von Wellenlängenkanälen, von denen jeder eine erste Schlitzbreite aufweist, und einen zweiten Satz von Wellenlängenkanälen, von denen jeder eine zweite Schlitzbreite aufweist, die sich von der ersten Schlitzbreite unterscheidet, aufweist.

17. Einrichtung (100) nach Anspruch 16, wobei der jeweilige wellenlängenselektive Eingangsschalter zu Folgendem auslegbar ist:
Leiten von optischen Signalen des ersten Satzes von Wellenlängenkanälen zu dem einen der Ausgangsanschlüsse davon; und
Leiten von optischen Signalen des zweiten Satzes von Wellenlängenkanälen zu dem anderen der Ausgangsanschlüsse davon.

18. Einrichtung (100) nach Anspruch 16, wobei der jeweilige wellenlängenselektive Eingangsschalter zu Folgendem ausgelegt ist:
den ersten Satz von Wellenlängenkanälen in einem ersten Spektralband angeordnet zu haben; und
den zweiten Satz von Wellenlängenkanälen in einem zweiten Spektralband angeordnet zu haben, wobei sich das zweite Spektralband vom ersten Spektralband unterscheidet.

19. Einrichtung (100) nach Anspruch 1, die ferner eine Vielzahl von optischen Add/Drop-Blöcken umfasst; und
wobei die Verbindungsvorrichtung (130) ferner zu Folgendem ausgelegt ist:
optisches Verbinden der Ausgangsanschlüsse der wellenlängenselektiven Eingangsschalter mit mindestens einigen der Add/Drop-Blöcke; und
optisches Verbinden der Eingangsanschlüsse der wellenlängenselektiven Ausgangsschalter mit mindestens einigen der Add/Drop-Blöcke.

20. Einrichtung (100) nach Anspruch 19, wobei:
die Vielzahl von wellenlängenselektiven Ausgangsschaltern N wellenlängenselektive Ausgangsschalter aufweist, wo N eine Ganzzahl größer als eins ist;
die Vielzahl von wellenlängenselektiven Eingangsschaltern N wellenlängenselektive Eingangsschalter aufweist;
die Vielzahl von optischen Add/Drop-Blöcken M optische Add/Drop-Blöcke aufweist, wo M eine Ganzzahl größer als eins ist;
jeder der wellenlängenselektiven Eingangsschalter K Ausgangsanschlüsse aufweist, wo K≥N+M; und
jeder der wellenlängenselektiven Ausgangsschalter L Eingangsanschlüsse aufweist, wo L≥2N+M-2.

## Revendications

1. Appareil (100) qui comprend :
une pluralité de commutateurs à sélection de longueur d'onde d'entrée (210), qui possèdent chacun un port d'entrée respectif et un ensemble respectif de ports de sortie ;
une pluralité de commutateurs à sélection de longueur d'onde de sortie (220), qui possèdent chacun un port de sortie respectif et un ensemble respectif de ports d'entrée ; et
un dispositif d'interconnexion (130) configuré pour relier optiquement les ports de sortie des commutateurs à sélection de longueur d'onde d'entrée (210) et les ports d'entrée des commutateurs à sélection de longueur d'onde de sortie (220) à l'aide de guides d'onde optiques ; et
dans lequel, pour au moins certaines paires des commutateurs à sélection de longueur d'onde d'entrée et de sortie reliés optiquement par le biais des guides d'onde optiques, le dispositif d'interconnexion (130) est configuré pour :
a) relier optiquement l'un des ports de sortie d'un commutateur à sélection de longueur d'onde d'entrée respectif à l'un des ports d'entrée d'un commutateur à sélection de longueur d'onde de sortie respectif ; et
pour relier optiquement un autre des portes de sortie du commutateur à sélection de longueur d'onde respectif audit des ports d'entrée, ou
b) relier optiquement l'un des ports de sortie d'un commutateur à sélection de longueur d'onde d'entrée respectif à l'un des ports d'entrée d'un commutateur à sélection de longueur d'onde de sortie respectif et pour relier optiquement un autre des ports de sortie du commutateur à sélection de longueur d'onde d'entrée respectif à un autre des ports d'entrée du commutateur à sélection de longueur d'onde de sortie respectif.

2. Appareil (100) selon la revendication 1, dans lequel le dispositif d'interconnexion (130) comprend un séparateur optique (250ᵢ) qui possède une entrée optique et une pluralité de sorties optiques, dans lequel l'entrée optique est reliée optiquement audit autre des ports de sortie du commutateur à sélection de longueur d'onde d'entrée respectif, dans lequel l'une des sorties optiques est reliée optiquement audit des ports d'entrée ou audit autre des ports d'entrée du commutateur à sélection de longueur d'onde de sortie respectif.

3. Appareil (100) selon la revendication 2, dans lequel une autre des sorties optiques du séparateur optique est reliée optiquement à un port d'entrée d'un autre commutateur à sélection de longueur d'onde de sortie.

4. Appareil (100) selon la revendication 2, dans lequel chacune des sorties optiques du séparateur optique est reliée optiquement à un port d'entrée d'un commutateur à sélection de longueur d'onde de sortie respectif différent.

5. Appareil (100) selon la revendication 2, dans lequel le dispositif d'interconnexion (130) comprend en outre un coupleur optique (360ᵢ) qui possède une première et une seconde entrées optiques et une sortie optique, dans lequel la première entrée optique est reliée optiquement audit des ports de sortie du commutateur à sélection de longueur d'onde d'entrée respectif, dans lequel la seconde entrée optique est reliée optiquement à ladite des sorties du séparateur optique, dans lequel la sortie optique du coupleur optique est reliée optiquement audit des ports d'entrée du commutateur à sélection de longueur d'onde de sortie respectif.

6. Appareil (100) selon la revendication 2, qui comprend en outre un commutateur d'interconnexion optique à degré N, où N est un entier supérieur à deux ; et
dans lequel le séparateur optique possède N―1 sorties optiques.

7. Appareil (100) selon la revendication 6, dans lequel le dispositif d'interconnexion (130) comprend N séparateurs optiques, qui possèdent chacun N―1 sorties optiques, dans lequel chacune des N―1 sorties optiques est reliée optiquement à un port d'entrée d'un commutateur à sélection de longueur d'onde de sortie respectif différent.

8. Appareil (100) selon la revendication 1, dans lequel le dispositif d'interconnexion (130) comprend un coupleur optique qui possède une première et une seconde entrées optiques et une sortie optique, dans lequel la première entrée optique est reliée optiquement audit des ports de sortie du commutateur à sélection de longueur d'onde d'entrée respectif, dans lequel la seconde entrée optique est reliée optiquement audit autre des ports de sortie du commutateur à sélection de longueur d'onde d'entrée respectif, dans lequel la sortie optique du coupleur optique est reliée optiquement audit des ports d'entrée du commutateur à sélection de longueur d'onde de sortie respectif.

9. Appareil (100) selon la revendication 8, qui comprend en outre un commutateur d'interconnexion optique à degré N, où N est un entier supérieur à deux ; et
dans lequel le dispositif d'interconnexion comprend N(N-1) 2x1 coupleurs optiques reliés aux guides d'onde optiques.

10. Appareil (100) selon la revendication 9, dans lequel le dispositif d'interconnexion (130) comprend N séparateurs optiques, qui possèdent chacun N―1 sorties optiques, dans lequel chacune des N―1 sorties optiques est reliée optiquement à un port d'entrée d'un autre commutateur à sélection de longueur d'onde de sortie respectif à l'aide de l'un des N(N-1) 2x1 coupleurs optiques.

11. Appareil (100) selon la revendication 1, dans lequel le dispositif d'interconnexion (130) comprend :
un premier coupleur optique qui possède une première et une seconde entrées optiques et une sortie optique, dans lequel la sortie optique du premier coupleur optique est reliée optiquement à l'un des ports d'entrée d'un commutateur à sélection de longueur d'onde de sortie correspondant, dans lequel la première entrée optique du premier coupleur optique est reliée optiquement à l'un des ports de sortie d'un premier commutateur à sélection de longueur d'onde d'entrée respectif, dans lequel la seconde entrée optique du premier coupleur optique est reliée optiquement à l'un des ports de sortie d'un second commutateur à sélection de longueur d'onde d'entrée respectif ; et
un second coupleur optique qui possède une première et une seconde entrées optiques et une sortie optique, dans lequel la sortie optique du second coupleur optique est reliée optiquement à un autre des ports d'entrée du commutateur à sélection de longueur d'onde de sortie correspondant, dans lequel la première entrée optique du second coupleur optique est reliée optiquement à un autre des ports de sortie du premier commutateur à sélection de longueur d'onde d'entrée respectif, dans lequel la seconde entrée optique du second coupleur optique est reliée optiquement à un autre des ports de sortie du second commutateur à sélection de longueur d'onde d'entrée respectif.

12. Appareil (100) selon la revendication 1, dans lequel le dispositif d'interconnexion (130) est configuré pour relier optiquement ledit autre des ports de sortie du commutateur à sélection de longueur d'onde d'entrée respectif audit autre des ports d'entrée du commutateur à sélection de longueur d'onde de sortie respectif.

13. Appareil (100) selon la revendication 1, qui comprend en outre un bloqueur de longueur d'onde couplé entre ledit autre des ports de sortie du commutateur à sélection de longueur d'onde d'entrée respectif et le dispositif d'interconnexion (130).

14. Appareil (100) selon la revendication 13, qui comprend en outre un amplificateur optique (410) relié en série au bloqueur de longueur d'onde (420) et couplé entre ledit autre des ports de sortie du commutateur à sélection de longueur d'onde d'entrée respectif et le dispositif d'interconnexion (130).

15. Appareil (100) selon la revendication 1, dans lequel chacun des commutateurs à sélection de longueur d'onde d'entrée possède K ports de sortie ; et
dans lequel chacun des commutateurs à sélection de longueur d'onde de sortie possède L ports d'entrée, où L>K.

16. Appareil (100) selon la revendication 1, dans lequel le commutateur à sélection de longueur d'onde d'entrée respectif possède un premier ensemble de canaux de longueur d'onde, qui possèdent chacun une première largeur de fente, et un second ensemble de canaux de longueur d'onde, qui possèdent chacun une seconde largeur de fente différente de la première largeur de fente.

17. Appareil (100) selon la revendication 16, dans lequel le commutateur à sélection de longueur d'onde d'entrée respectif peut être configuré pour :
acheminer les signaux optiques du premier ensemble de canaux de longueur d'onde vers ledit des ports de sortie de celui-ci ; et
acheminer les signaux optiques du second ensemble de canaux de longueur d'onde vers un autre des ports de sortie de celui-ci .

18. Appareil (100) selon la revendication 16, dans lequel le commutateur à sélection de longueur d'onde d'entrée respectif est configuré pour :
avoir le premier ensemble de canaux de longueur d'onde disposé sur une première bande spectrale ; et
pour avoir le second ensemble de canaux de longueur d'onde disposé sur une seconde bande spectrale, dans lequel la seconde bande spectrale est distincte de la première bande spectrale.

19. Appareil (100) selon la revendication 1, qui comprend en outre une pluralité de blocs optiques d'ajout/d'abandon ; et
dans lequel le dispositif d'interconnexion (130) est en outre configuré pour :
relier optiquement les ports de sortie des commutateurs à sélection de longueur d'onde d'entrée à au moins certains des blocs optiques d'ajout/d'abandon ; et
pour relier optiquement les ports d'entrée des commutateurs à sélection de longueur d'onde de sortie à au moins certains des blocs optiques d'ajout/d'abandon.

20. Appareil (100) selon la revendication 19, dans lequel :
la pluralité de commutateurs à sélection de longueur d'onde de sortie possède N commutateurs à sélection de longueur d'onde de sortie, où N est un entier supérieur à un ;
la pluralité de commutateurs à sélection de longueur d'onde d'entrée possède N commutateurs à sélection de longueur d'onde d'entrée ;
la pluralité de blocs optiques d'ajout/d'abandon possède M blocs optiques d'ajout/d'abandon, où M est un entier supérieur à un ;
chacun des commutateurs à sélection de longueur d'onde d'entrée possède K ports de sortie, où K≥N+M ; et
chacun des commutateurs à sélection de longueur d'onde de sortie possède L ports d'entrée, où L≥2N+M-2.
